# EUROPÄISCHE PATENTSCHRIFT

(11) **EP 1 506 116 B1**
(45) Veröffentlichungstag und Bekanntmachung des Hinweises auf die Patenterteilung: **28.06.2006**
(21) Anmeldenummer: 03752767.8
(22) Anmeldetag: 19.05.2003
(51) Int. Cl.: B64D 11/00, B60R 5/00

(54) **ABSENKBARES GEPÄCKFACH MIT RÜCKSEITIGER KRAFTUNTERSTÜTZUNGSEINRICHTUNG**
LOWERABLE LUGGAGE COMPARTMENT WITH A REAR FORCE SUPPORTING DEVICE
COMPARTIMENT A BAGAGES POUVANT ETRE ABAISSE ET DOTE D'UN DISPOSITIF ARRIERE DE SUPPORT PAR LA FORCE

(30) Priorität: 17.05.2002 DE 10222124
(43) Veröffentlichungstag der Anmeldung: 16.02.2005
(73) Patentinhaber: Airbus Deutschland GmbH, 21129 Hamburg (DE)
(72) Erfinder: GRAF, Oleg, 88483 Burgrieden (DE); POBERSCHNIGG, Ralf, 90513 Zirndorf (DE)
(74) Vertreter: Beyer, Andreas
(86) Internationale Anmeldenummer: PCT/EP2003/005249
(87) Internationale Veröffentlichungsnummer: WO 2003/097455

(56) Entgegenhaltungen:
- DE-A- 19 617 657
- DE-A- 19 800 588

## Beschreibung

Die vorliegende Erfindung betrifft ein absenkbares Gepäckfach, insbesondere für ein Passagierflugzeug, mit einer Kraftunterstützungseinrichtung zur Bereitstellung einer Unterstützungskraft beim Öffnen und/oder Schließen des Gepäckfaches.

Absenkbare Überkopf-Gepäckfächer in Flugzeugen sind bekannt, siehe DE 196 17 657 A1. So beschreibt z.B. die DE 41 30 644 C2 ein absenkbares Überkopf-Gepäckfach eines Passagierflugzeuges mit Führungssystemen in Form von Gelenkvierecken an jeder Seitenwand des Gepäckfaches und einer Gasdruckfeder für jedes Führungssystem, die entsprechend dem Gewicht des Gepäckfaches eine Unterstützungskraft zum Hochschwenken des Gepäckfachs liefert. Eine Verstelleinrichtung erfasst während des Beladens das Gewicht des Gepäckfachs und wirkt über eine Verstellverbindung auf den Kraftangriffspunkt der Gasdruckfeder ein, um eine dem jeweiligen Beladegewicht des Gepäckfaches entsprechende Einstellung zu erzielen.

Aus der DE 43 35 151 C2 ist ein absenkbares Überkopf-Gepäckfach bekannt, welches ebenfalls an seinen beiden Seitenwänden je ein Führungssystem mit einer zugeordneten Gasfeder aufweist. Die Gasfeder steht mit einer Unterstützungseinrichtung in Wirkverbindung, die eine dem Gewicht des Gepäckfaches angepasste Unterstützungskraft für das Hochschwenken des Gepäckfachs bereitstellt. Eine Blockiereinrichtung ermöglicht eine Verriegelung der Unterstützungseinrichtung.

Die DE 44 46 772 C1 schließlich beschreibt eine Vorrichtung zum Führen eines absenkbaren Überkopf-Gepäckfaches mit zwei beidseitig an den Seitenwänden des Gepäckfaches angeordneten Gelenkvierecken und einem Federsystem je Gelenkviereck zur Unterstützung der Hochschwenkbewegung des Gepäckfaches. Eine innerhalb des Gepäckfaches angeordnete Waageplatte wirkt auf unterhalb der Waageplatte angeordnete Druckgeber, die ihrerseits über mindestens eine Verstellverbindung mit einem Verstellzylinder verbunden sind, der auf eine Verstelleinrichtung zum Verschieben des Kraftangriffspunktes des Federsystems einwirkt, um ihn in Abhängigkeit vom Gewicht des Gepäckfachs zu verschieben, so dass ein dem Lastmoment, das aus dem Gewicht des Gepäckfachs resultiert, angepasstes entgegenwirkendes Drehmoment bereitgestellt wird.

Der Erfindung liegt die Aufgabe zugrunde, ein absenkbares Gepäckfach mit einer Kraftunterstützungseinrichtung dahingehend zu verbessern, dass das nutzbare Volumen des Gepäckfaches vergrößert ist und dass die Einheit aus Gepäckfach und Kraftunterstützungseinrichtung bei verbesserter Wartbarkeit leichter als bisher ist.

Diese Aufgabe wird erfindungsgemäβ durch die Merkmale des Anspruchs 1 gelöst. Die Unteransprüche definieren weiter Ausführungsformen des Gegenstandes der Erfindung.

Die erfindungsgemäße Lösung zeichnet sich dadurch aus, dass nur eine einzige, von der Führung des Gepäckfaches entkoppelte Kraftunterstützungseinrichtung auf der Rückseite des Gepäckfaches angeordnet ist und dass die als Kraftunterstützungsmodul mit einem eigenen Gehäuse ausgeführte Kraftunterstützungseinrichtung sich in Verbindung mit verschiedenen Typen von Gepäckfächem verwenden lässt und darüber hinaus im Fall eines Versagens als Einheit einfach austauschbar und somit sehr wartungsfreundlich ist. Durch die nur eine flexible Kraftübertragungseinrichtung kann der Spalt zwischen seitlich aneinander angrenzenden Gepäckfächern schmaler ausgeführt werden. Das innere Volumen eines Gepäckfaches kann deshalb ohne Vergrößerung seiner äußeren Abmessungen erhöht werden. Die erfindungsgemäße Lösung ist darüber hinaus deutlich weniger anfällig gegenüber einer asymmetrischen Belastung des Gepäckfaches. Ferner ist die erfindungsgemäße Lösung gewichtssparend und kostengünstiger, weil alle Bauteile der Kraftunterstützungseinrichtung nur einmal und nicht doppelt benötigt werden.

In dem Kraftunterstützungsmodul erzeugt vorzugsweise eine Gasdruckfeder die geforderte Unterstützungskraft.

Bei dem erfindungsgemäßen Gepäckfach wird die von der Kraftunterstützungseinrichtung bereitgestellte Kraft mittels einer einzigen flexiblen Kraftübertragungseinrichtung auf das Gepäckfach übertragen. Vorteilhaft greift die flexible Kraftübertragungseinrichtung an oder nahe der Oberseite des Gepäckfaches an. Die flexible Kraftübertragungseinrichtung kann an nur einer Stelle des Gepäckfaches oder auch an mehreren Stellen angreifen. Vorzugsweise ist die flexible Kraftübertragungseinrichtung so ausgeführt, dass sie zumindest einen Kraftangriffspunkt am Gepäckfach aufweist, der bezüglich der Breitenerstreckung des Gepäckfaches zumindest in der Nähe der Mitte liegt. Vorzugsweise sind darüber hinaus der Kraftangriffspunkt oder die Kraftangriffspunkte so gewählt, dass sie an oder nahe einem vorderen Rand der Oberseite des Gepäckfaches angeordnet sind. Dies ist insbesondere dann vorteilhaft, wenn nur ein Kraftangriffspunkt am Gepäckfach vorhanden ist, weil sich aus einer Anordnung an oder nahe dem vorderen Rand des Gepäckfaches günstige Hebelverhältnisse ergeben. Alternativ können bei Vorhandensein mehrerer Kraftangriffspunkte diese so gelegt werden, dass einer von ihnen, vorzugsweise der mittlere Kraftangriffspunkt, sich an oder nahe dem vorderen Rand der Oberseite des Gepäckfaches befindet, während beispielsweise ein linker und ein rechter zusätzlicher Kraftangriffspunkt sich nahe oder an den zugehörigen Seitenrändem des Gepäckfaches befinden.

Als flexible Kraftübertragungseinrichtung ist jedes zumindest in einer Ebene flexibles Kraftübertragungsmittel geeignet. In einer Ausführungsform des erfindungsgemäßen Gepäckfaches ist die flexible Kraftübertragungseinrichtung ein über zumindest eine Umlenkrolle geführtes Seil. Das Seil kann ein beispielsweise aus rostfreiem Stahl gefertigtes Seil sein, es kann jedoch auch, insbesondere zur weiteren Gewichtserspamis, ein geeignetes Kunststoffseil oder ein aus einem anderen für den genannten Einsatzzweck geeigneten Material bestehendes Seil sein.

Bei einer anderen Ausführungsform ist die flexible Kraftübertragungseinrichtung eine zumindest einmal umgelenkte Kette. Bei einer noch anderen Ausführungsform ist die flexible Kraftübertragungseinrichtung ein Bowdenzug. Aufgrund der Hülle, in der ein Bowdenzug geführt ist, ist bei der letztgenannten Ausführungsform keine separate Umlenkung erforderlich, sondern der Bowdenzug kann direkt von der Kraftunterstützungseinrichtung zum gewünschten Kraftangriffspunkt am Gepäckfach verlegt werden.

Die Kraftunterstützungseinrichtung kann prinzipiell an jedem beliebigen Ort hinter der Rückseite des Gepäckfaches befestigt sein. Bei bevorzugten Ausführungsformen des erfindungsgemäßen absenkbaren Gepäckfaches ist die Kraftunterstützungseinrichtung an einem Gehäuse befestigt, in dem das Gepäckfach geführt ist. Bei einem Passagierflugzeug ist dieses Gehäuse mit der tragenden Struktur des Flugzeuges verbunden.

Bei besonders bevorzugten Ausgestaltungen des erfindungsgemäßen absenkbaren Gepäckfaches ist die Kraftunterstützungseinrichtung so gestaltet, dass sich die Unterstützungskraft in Abhängigkeit des Beladungsgewichtes des Gepäckfaches ändert. Ein Benutzer des Gepäckfaches muss dann unabhängig vom Beladungszustand des Gepäckfaches eine immer im wesentlichen gleiche Kraft aufwenden, um das Gepäckfach zu schließen.

Ein bevorzugtes Ausführungsbeispiel eines erfindungsgemäßen absenkbaren Gepäckfaches wird im folgenden anhand der beigefügten schematischen Figuren näher erläutert. Es zeigt:
- Fig. 1: ein erfindungsgemäßes absenkbares Überkopf-Gepäckfach eines Flugzeuges, das mit einer hinter der Rückseite des Gepäckfaches montierten Kraftunterstützungseinrichtung versehen ist, deren Unterstützungskraft mittels eines Seils auf das Gepäckfach übertragen wird,
- Fig. 2: eine aufgebrochene, schematische Seitenansicht des Gepäckfaches aus Fig. 1,
- Fig. 3: eine auseinandergezogene, räumliche Darstellung des Gepäckfaches aus Fig. 1 ohne die Kraftübertragungseinrichtung in Gestalt des Seiles, und
- Fig. 4: eine räumliche Ansicht des Gepäckfaches aus Fig. 1 von hinten, die die Integration der Kraftunterstützungseinrichtung in ein Gehäuse des Gepäckfaches zeigt.

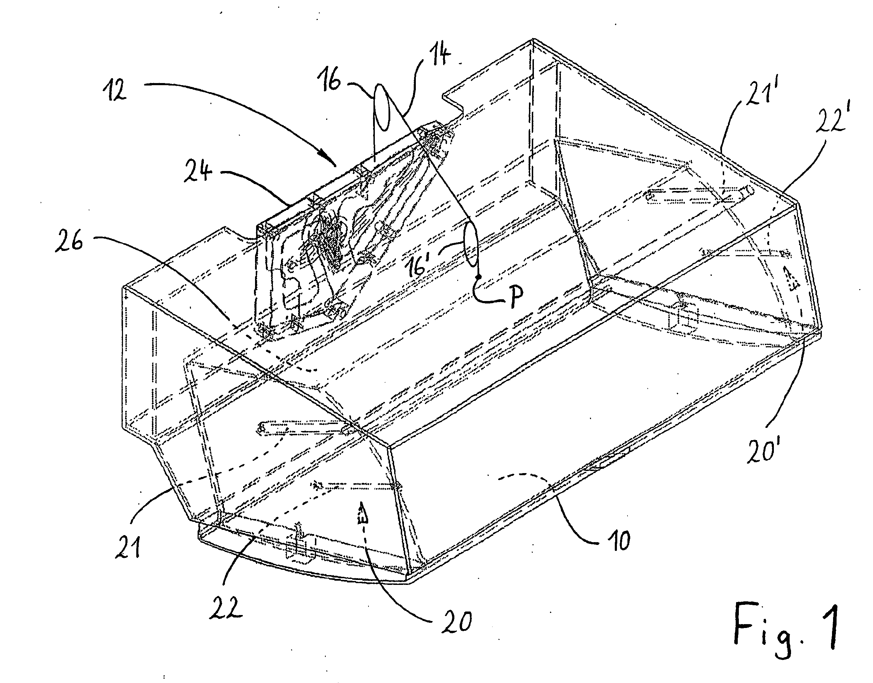

In Figur 1 ist ein allgemein mit 10 bezeichnetes absenkbares Überkopf-Gepäckfach eines nicht weiter dargestellten Flugzeuges gezeigt. Hinter der Rückseite des Gepäckfaches 10 ist eine als Kraftunterstützungsmodul 12 ausgeführte Kraftunterstützungseinrichtung montiert, die mittels eines als flexible Kraftübertragungseinrichtung dienenden Seils 14 eine Unterstützungskraft auf das Gepäckfach 10 überträgt, um die zum Öffnen und Schließen des Gepäckfaches 10 notwendige Kraft auf einem niedrigen Niveau zu halten, unabhängig davon, ob das Gepäckfach 12 leer oder voll beladen ist. Das Seil 14 ist mit seinem einen Ende im Kraftunterstützungsmodul 12 und mit seinem anderen Ende am Gepäckfach 10 befestigt und über zwei hier nur angedeutete Umlenkrollen 16, 16' geführt.

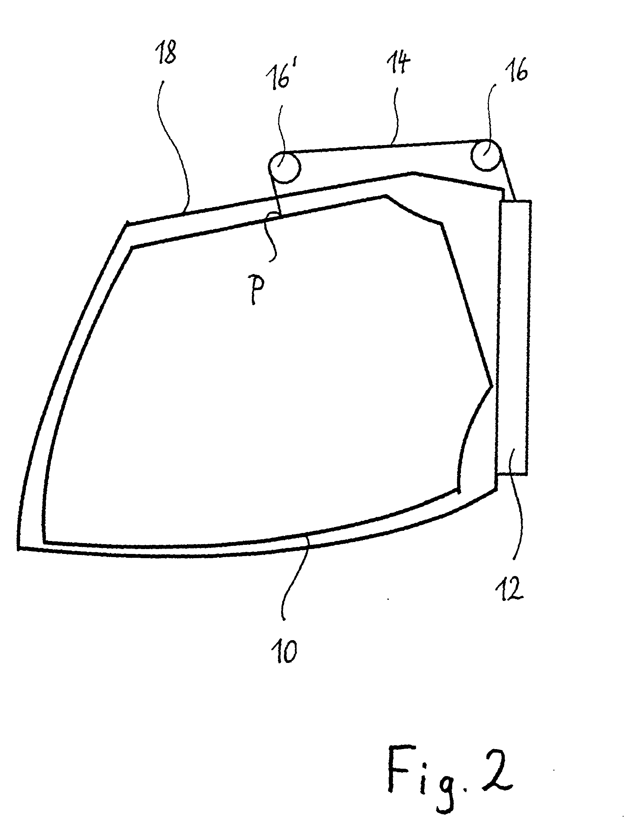

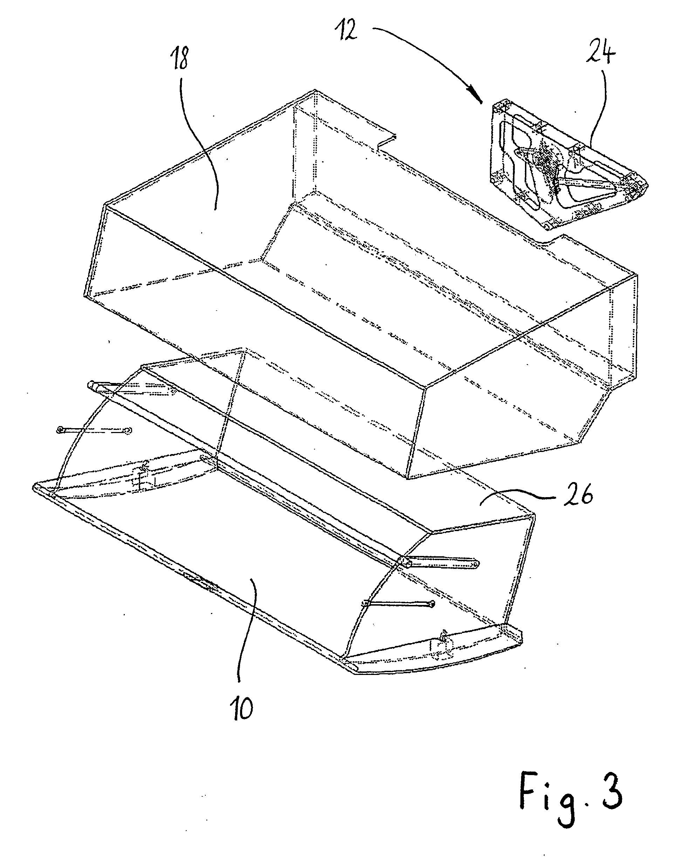

Wie aus den Fig. 2 und 3 besser zu erkennen, ist das Gepäckfach 10 in einem Gehäuse 18 aufgenommen, welches auf nicht weiter dargestellte Weise an der tragenden Struktur des Flugzeuges befestigt ist. Das Gepäckfach 10 ist in dem Gehäuse 18 mittels zweier Führungseinrichtungen 20 und 20', die auf der einen bzw. der anderen Seite des Gepäckfaches 10 angeordnet sind und jeweils zwei Hebel 21, 22 bzw. 21', 22' aufweisen, derart geführt, dass es beim Öffnen aus dem Gehäuse 18 nach unten herausschwenkt und sich dabei gleichzeitig absenkt.

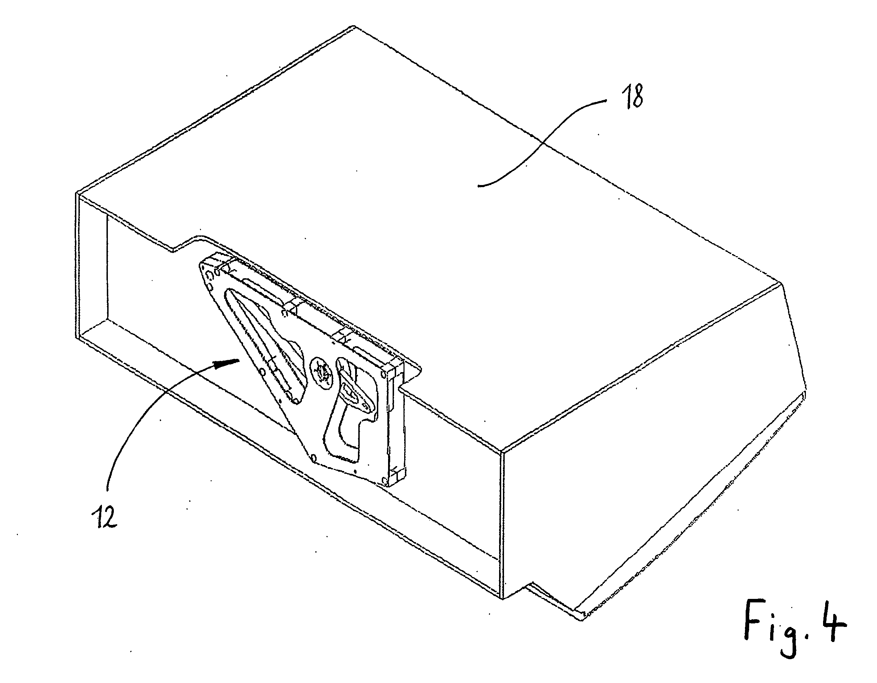

Das Kraftunterstützungsmodul 12 ist, wie besonders aus den Fig. 3 und 4 zu erkennen, vollständig in eine Rückwand des Gehäuses 18 eingelassen. Im gezeigten Ausführungsbeispiel ist das Kraftunterstützungsmodul 12 etwa in der Mitte der Rückwand des Gehäuses 18 angeordnet.

Das Kraftunterstützungsmodul 12 ist als separat handhabbare Einheit ausgebildet und weist selbst ein Gehäuse 24 auf, in dem alle zur Bereitstellung der gewünschten Unterstützungskraft notwendigen Bauteile untergebracht sind. Das Kraftunterstützungsmodul 12 ist dazu in der Lage, die bereitgestellte Unterstützungskraft dem Beladungszustand des Gepäckfaches 10 anzupassen, so dass ein Benutzer eine zumindest im wesentlichen immer gleiche, vom Beladungszustand unabhängige Schließkraft aufbringen muss, um das Gepäckfach 10 nach oben zu drücken und zu schließen.

Bei dem dargestellten Ausführungsbeispiel tritt das die Unterstützungskraft auf das Gepäckfach 10 übertragende Seil 14 oben aus dem Kraftunterstützungsmodul 12 aus, wird dann mittels der ersten Umlenkrolle 16 so umgelenkt, dass es im wesentlichen parallel zur Oberseite des Gehäuses 18 verläuft, und wird dann von der zweiten Umlenkrolle 16' nach unten in Richtung auf die Oberseite 26 des Gepäckfaches 10 umgelenkt. An einem Kraftangriffspunkt P auf der Oberseite 26 des Gepäckfaches 10 ist das Seil 14 geeignet befestigt. In dem in Fig. 1 gezeigten Ausführungsbeispiel ist der Kraftangriffspunkt P in der Mitte zwischen den beiden Seiten des Gepäckfaches 10 und nahe einem vorderen Rand 28 der Oberseite 26 des Gepäckfaches 10 angeordnet. Abhängig von den Einbaubedingungen des Gepäckfaches 10 kann der Kraftangriffspunkt P jedoch auch vom vorderen Rand 28 entfernt angeordnet sein, beispielsweise etwa in der Mitte der Oberseite 26 des Gepäckfaches 10 wie in Fig. 2 dargestellt.

Nicht gezeigte Ausführungsformen können mehrere Kraftangriffspunkte aufweisen und statt des Seils 14 können andere flexible Kraftübertragungseinrichtungen zum Einsatz kommen, beispielsweise Ketten oder Bowdenzüge.

## Patentansprüche

1. Absenkbares Gepäckfach (10), insbesondere für ein Passagierflugzeug, mit einer Kraftunterstützungseinrichtung zur Bereitstellung einer Unterstützungskraft beim Öffnen und/oder Schließen des Gepäckfaches (10), wobei die von der Kraftunterstützungseinrichtung bereitgestellte Kraft mittels einer flexiblen Kraftübertragungseinrichtung auf das Gepäckfach (10) übertragen wird und die Kraftunterstützungseinrichtung die einzige auf das Gepäckfach (10) wirkende Kraftunterstützungseinrichtung ist, und wobei die von der Kraftunterstützungseinrichtung bereitgestellte Kraft mittels einer einzigen flexiblen Kraftübertragungseinrichtung auf das Gepäckfach (10) übertragen wird, **dadurch gekennzeichnet, dass**
- die Kraftunterstützungseinrichtung hinter der Rückseite des Gepäckfaches angeordnet ist,
- die Kraftunterstützungseinrichtung als Kraftunterstützungsmodul (12) mit einem eigenen Gehäuse (24) ausgeführt ist,
- in dem Gehäuse (24) des Kraftunterstützungsmoduls (12) ein Federsystem die Unterstützungskraft erzeugt.

2. Gepäckfach nach Anspruch 1,
**dadurch gekennzeichnet, dass** die Kraftunterstützungseinrichtung an einem Gehäuse (18) befestigt ist, in dem das Gepäckfach (10) geführt ist.

3. Gepäckfach nach Anspruch 1 oder 2,
**dadurch gekennzeichnet, dass** die flexible Kraftübertragungseinrichtung an oder nahe einer Oberseite (26) des Gepäckfaches (10) angreift.

4. Gepäckfach nach Anspruch 3,
**dadurch gekennzeichnet, dass** die flexible Kraftübertragungseinrichtung bezüglich der Breitenerstreckung des Gepäckfaches (10) zumindest näherungsweise in der Mitte angreift.

5. Gepäckfach nach Anspruch 4,
**dadurch gekennzeichnet, dass** die flexible Kraftübertragungseinrichtung an oder nahe einem vorderen Rand (28) der Oberseite (26) des Gepäckfaches (10) angreift.

6. Gepäckfach nach einem der vorhergehenden Ansprüche,
**dadurch gekennzeichnet, dass** die flexible Kraftübertragungseinrichtung ein über zumindest eine Umlenkrolle (16) geführtes Seil (14) ist.

7. Gepäckfach nach einem der Ansprüche 1 bis 5,
**dadurch gekennzeichnet, dass** die flexible Kraftübertragungseinrichtung eine wenigstens einmal umgelenkte Kette ist.

8. Gepäckfach nach einem der Ansprüche 1 bis 5,
**dadurch gekennzeichnet, dass** die flexible Kraftübertragungseinrichtung ein Bowdenzug ist.

9. Gepäckfach nach einem der vorhergehenden Ansprüche,
**dadurch gekennzeichnet, dass** die Unterstützungskraft sich in Abhängigkeit des Beladungsgewichtes des Gepäckfaches (10) ändert.

## Claims

1. Lowerable luggage compartment (10), in particular for a passenger aircraft, comprising a force assistance device for providing an assistance force during opening and/or closing of the luggage compartment (10), wherein the force provided by the force assistance device is transmitted by means of a flexible force-transmitting device to the luggage compartment (10) and the force assistance device is the sole force assistance device acting upon the luggage compartment (10), and wherein the force provided by the force assistance device is transmitted by means of a single flexible force-transmitting device to the luggage compartment (10), **characterized in that**
- the force assistance device is arranged behind the back side of the luggage compartment;
- the force assistance device is designed as a force assistance module (12) with its own housing (24);
- a spring system generates the assistance force in the housing (24) of the force assistance module (12).

2. Luggage compartment according to claim 1,
**characterized in that** the force assistance device is fastened to a housing (18), in which the luggage compartment (10) is guided.

3. Luggage compartment according to claim 1 or 2,
**characterized in that** the flexible force-transmitting device acts on or close to an upper side (26) of the luggage compartment (10).

4. Luggage compartment according to claim 3,
**characterized in that** the flexible force-transmitting device acts, in relation to the width extension of the luggage compartment (10), at least approximately in the middle.

5. Luggage compartment according to claim 4,
**characterized in that** the flexible force-transmitting device acts on or close to a front edge (28) of the upper side (26) of the luggage compartment (10).

6. Luggage compartment according to one of the preceding claims,
**characterized in that** the flexible force-transmitting device is a cable (14) extending via at least one guide pulley (16).

7. Luggage compartment according to one of claims 1 to 5,
**characterized in that** the flexible force-transmitting device is a chain, which is deflected at least once.

8. Luggage compartment according to one of claims 1 to 5,
**characterized in that** the flexible force-transmitting device is a Bowden cable.

9. Luggage compartment according to one of the preceding claims,
**characterized in that** the assistance force varies as a function of the loaded weight of the luggage compartment (10).

## Revendications

1. Compartiment (10) à bagages pouvant être abaissé, en particulier pour un avion destiné au transport des passagers, et doté d'un dispositif de support par la force servant à fournir une force de support lors de l'ouverture et/ou de la fermeture dudit compartiment (10) à bagages, la force fournie par le dispositif de support par la force étant transmise au compartiment (10) à bagages par l'intermédiaire d'un dispositif souple de transmission de force et le dispositif de support par la force étant le seul dispositif de support par la force à agir sur le compartiment (10) à bagages, et la force fournie par le dispositif de support par la force étant transmise au compartiment (10) à bagages par l'intermédiaire d'un seul dispositif souple de transmission de force, **caractérisé en ce que**
- le dispositif de support par la force est placé derrière la face arrière dudit compartiment (10) à bagages,
- le dispositif de support par la force est réalisé sous forme de module (12) de support par la force doté d'un boîtier (24) propre et
- un système à ressort monté dans le boîtier (24) du module (12) de support par la force produit la force de support.

2. Compartiment à bagages selon la revendication 1,
**caractérisé en ce que** le dispositif de support par la force est fixé au boîtier (18) dans lequel est guidé le compartiment (10) à bagages.

3. Compartiment à bagages selon la revendication 1 ou 2,
**caractérisé en ce que** le dispositif souple de transmission de force applique au niveau ou à proximité d'une face supérieure (26) du compartiment (10) à bagages la force transmise.

4. Compartiment à bagages selon la revendication 3,
**caractérisé en ce que** le dispositif souple de transmission de force applique pour le moins approximativement au milieu du compartiment (10) à bagages considéré dans le sens de la largeur la force transmise.

5. Compartiment à bagages selon la revendication 4,
**caractérisé en ce que** le dispositif souple de transmission de force applique au niveau ou à proximité d'un bord (28) avant de la face supérieure (26) du compartiment (10) à bagages la force transmise.

6. Compartiment à bagages selon l'une des revendications précédentes,
**caractérisé en ce que** le dispositif souple de transmission de force est un câble (14) qui passe sur au moins un galet de guidage (16).

7. Compartiment à bagages selon l'une des revendications 1 à 5,
**caractérisé en ce que** le dispositif souple de transmission de force est une chaîne qui change au moins une fois de direction.

8. Compartiment à bagages selon l'une des revendications 1 à 5,
**caractérisé en ce que** le dispositif souple de transmission de force est un câble Bowden.

9. Compartiment à bagages selon l'une des revendications précédentes,
**caractérisé en ce que** la force de support varie en fonction du poids de chargement du compartiment (10) à bagages.
